# EUROPEAN PATENT SPECIFICATION

(11) **EP 3 230 230 B1**
(45) Date of publication and mention of the grant of the patent: **19.08.2020**
(21) Application number: 15843055.3
(22) Date of filing: 04.12.2015
(51) Int. Cl.: C04B 28/02, C04B 28/04, C08L 101/14, C04B 111/20

(54) **METHOD OF EXPANDING EXPANDABLE POLYMERIC MICROSPHERES AND METHOD OF MANUFACTURING A CONSTRUCTION MATERIAL AND A CEMENTITIOUS COMPOSITION CONTAINING SUCH EXPANDED MICROSPHERES**
VERFAHREN ZUM BLÄHEN VON BLÄHFÄHIGEN POLYMEREN MIKROHOHLKUGELN UND VERFAHREN ZUM HERSTELLEN VON BAUSTOFF UND ZEMENTÄRER ZUSAMMENSETZUNG ENTHALTEND DERART EXPANDIERTE MIKROHOHLKUGELN
PROCÉDÉ D'EXPANSION DE MICROBULLES POLYMÈRES EXPANSIBLES ET PROCÉDÉ DE FABRICATION D'UN MATÉRIAU DE CONSTRUCTION ET D'UNE COMPOSITION CIMENTAIRE CONTENANT DE TELLES MICROSBULLES EXPANSÉES

(30) Priority: 11.12.2014 US 201462090758 P
(43) Date of publication of application: 18.10.2017
(73) Proprietor: Construction Research & Technology GmbH, 83308 Trostberg (DE)
(72) Inventor: ONG, Frank, Shaode, Solon, OH 44139 (US); BURY, Mark, A., Middleburg Heights, OH 44130 (US); FARRINGTON, Stephen, A., University Heights, OH 44118 (US); MUESSIG, Stefan, 67158 Ellerstadt (DE); SMITH, James, C., Cuyahoga Falls, OH 44221 (US)
(74) Representative: BASF IP Association
(86) International application number: PCT/EP2015/078633
(87) International publication number: WO 2016/091742

(56) References cited:
- WO-A1-2013/156589
- JP-A- 2005 254 213
- JP-B2- 5 588 880
- US-A- 4 722 943
- US-A1- 2004 144 537
- US-A1- 2009 093 558
- US-A1- 2013 280 364

## Description

Provided is a method of expanding expandable polymeric microspheres and a method of manufacturing a construction material including expanding expandable polymeric microspheres and mixing the expanded, expandable polymeric microspheres with a construction material for use in cementitious compositions.

Freeze-thaw cycles can be extremely damaging to water-saturated hardened cementitious compositions, such as concrete. The best known technique to prevent or reduce the damage done is the incorporation in the composition of microscopically fine pores or voids. The pores or voids function as internal expansion chambers and can therefore protect the composition from freeze-thaw damage by relieving changes in hydraulic pressure caused by freeze-thaw cycling. A conventional method used for producing such voids in cementitious compositions is by introducing air-entraining agents into the compositions, which stabilize tiny bubbles of air that are entrapped in the composition during mixing.

Unfortunately, this approach of producing air voids in cementitious compositions is plagued by a number of production and placement issues, some of which are the following:
Air Content: Changes in air content of the cementitious composition can result in a composition with poor resistance to freeze-thaw damage if the air content drops with time or reduce the compressive strength of the composition if the air content increases with time. Examples are pumping a cementitious composition (decreasing air content by compression), job-site addition of a superplasticizer (often elevates air content or destabilizes the air void system), and interaction of specific admixtures with the air-entraining surfactant (that could increase or decrease air content).

Air Void Stabilization: The inability to stabilize air bubbles may be caused by the presence of materials that adsorb the stabilizing surfactant, i.e., fly ash having high surface area carbon or insufficient water for the surfactant to work properly, i.e, low slump concrete.

Air Void Characteristics: Formation of bubbles that are too large to provide resistance to freezing and thawing damage may be the result of poor quality or poorly graded aggregates, use of other admixtures that destabilize the bubbles, etc. Such voids are often unstable and tend to float to the surface of the fresh concrete.

Overfinishing: Removal of air by overfinishing, removes air from the surface of the concrete, typically resulting in distress by scaling of the detrained zone of cement paste adjacent to the overfinished surface.

The generation and stabilization of air at the time of mixing and ensuring it remains at the appropriate amount and air void size until the cementitious composition hardens remain the largest day-to-day challenges for the cementitious composition producer in North America. The air content and the characteristics of the air void system entrained into the cementitious composition cannot be controlled by direct quantitative means, but only indirectly through the amount and/or type of air-entraining agent added to the composition. Factors such as the composition and particle shape of the aggregates, the type and quantity of cement in the mix, the consistency of the cementitious composition, the type of mixer used, the mixing time, and the temperature all influence the performance of the air-entraining agent. The void size distribution in ordinary air-entrained concrete can show a very wide range of variation, between 10 and 3,000 micrometers (µm) or more. In such cementitious compositions, besides the small voids which are essential to cyclic freeze-thaw damage resistance, the presence of larger voids, which contribute little to the durability of the cementitious composition and could reduce the strength of the composition, has to be accepted as an unavoidable feature.

Air-entraining agents have been shown to provide resistance to freeze-thaw damage, as well as scaling damage resistance, which occurs when the surface of the hardened cementitious composition breaks away for any of a number of reasons, some of which are discussed above. However, because conventional air-entraining agents suffer from the problems discussed above, the cementitious composition industry is searching for new and better admixtures to provide the properties which are currently provided by conventional air-entraining agents.

A recent development is to use polymeric microspheres to create controlled-size voids within cementitious compositions. However, development is still ongoing to improve the function of polymeric microspheres within cementitious compositions, and to reduce the cost of including polymeric microspheres in cementitious compositions.

In order to provide appropriately sized air voids, polymeric microspheres may need to be expanded prior to incorporation into cementitious compositions. After expansion, expanded polymeric microspheres may have up to about 75 times the volume of the unexpanded microspheres. Providing cementitious composition admixtures which include expanded polymeric microspheres can be expensive, due to the high shipping cost associated with shipping an admixture which includes high-volume expanded microspheres, particularly if provided in an aqueous slurry which may include a volume of water.

WO 2013/156589 A1 describes a method of expanding expandable polymeric microspheres comprising contacting an aqueous slurry comprising unexpanded, expandable polymeric microspheres with steam proximate to and/or during manufacture of a cementitious composition, wherein the aqueous slurry optionally further comprises an admixture for the cementitious composition.

US 4,722,943 discloses a method of drying expandable thermoplastic polymer microspheres in a wet cake to produce free-flowing dry microspheres comprising the steps of a) mixing a thermoplastic microsphere wet cake with a processing aid, b) drying said wet cake and c) collecting free-flowing dry microspheres. In the drying step a heat exchanger can be used as a dryer.

What is needed is a method to provide polymeric microspheres for use in cementitious compositions and cementitious articles at a reasonable price.

Embodiments of the subject matter are disclosed with reference to the accompanying drawings and are for illustrative purposes only. The subject matter is not limited in its application to the details of construction or the arrangement of the components illustrated in the drawings. Like reference numerals are used to indicate like components, unless otherwise indicated.
FIG. 1 is a schematic diagram of an embodiment of an apparatus for performing the subject method(s).
FIG. 2 is a schematic diagram of an embodiment of an apparatus for performing the subject method(s).
FIG. 3 is a photograph of expanded microspheres containing 85% moisture.
FIG. 4 is a photograph of expanded microspheres dispersed in water.
FIG. 5 is a photograph of expanded microspheres in an article of concrete.
The expanded polymeric microspheres provide void spaces in cementitious compositions prior to final setting, and such void spaces act to increase the freeze-thaw durability of the cementitious material. Expanded polymeric microspheres introduce voids into cementitious compositions to produce a fully formed void structure in cementitious compositions which resists concrete degradation produced by water-saturated cyclic freezing and does not rely on air bubble stabilization during mixing of cementitious compositions. The freeze-thaw durability enhancement produced with the expanded polymeric microspheres is based on a physical mechanism for relieving stresses produced when water freezes in a cementitious material. In conventional practice, properly sized and spaced voids are generated in the hardened material by using chemical admixtures to stabilize the air voids entrained into a cementitious composition during mixing. In conventional cementitious compositions these chemical admixtures as a class are called air entraining agents. The present admixture utilizes expanded polymeric microspheres to form a void structure in cementitious compositions and does not require the production and/or stabilization of air entrained during the mixing process.

The use of expanded polymeric microspheres substantially eliminates some of the practical problems encountered in the current art. It also makes it possible to use some materials, i.e., low grade, high-carbon fly ash, which may be landfilled because it is considered unusable in air-entrained cementitious compositions without further treatment. This results in cement savings, and therefore economic savings. As the voids "created" by this approach are much smaller than those obtained by conventional air-entraining agents, the volume of expanded polymeric microspheres that is required to achieve the desired durability is also much lower than in conventional air entrained cementitious compositions. Therefore, a higher compressive strength can be achieved with the present admixtures and methods at the same level of protection against freezing and thawing damage. Consequently, the most expensive component used to achieve strength, i.e., cement, can be saved.

The expandable polymeric microspheres may be comprised of a polymer that is at least one of polyethylene, polypropylene, polymethyl methacrylate, poly-o-chlorostyrene, polyvinyl chloride, polyvinylidene chloride, polyacrylonitrile, polymethacrylonitrile, polystyrene, and copolymers thereof, such as copolymers of vinylidene chloride-acrylonitrile, polyacrylonitrile-copolymethacrylonitrile, polyvinylidene chloride-polyacrylonitrile, or vinyl chloride-vinylidene chloride, and the like. As the microspheres are composed of polymers, the wall may be flexible, such that it moves in response to pressure. The material from which the microspheres are to be made, therefore, may be flexible, and, in certain embodiments, resistant to the alkaline environment of cementitious compositions. Without limitation, suitable expandable polymeric microspheres are available from Eka Chemicals Inc., an Akzo Nobel company (Duluth, GA), under the trade name EXPANCEL®. Non-limiting examples of suitable EXPANCEL® polymeric microspheres include expanded polymeric microspheres having densities in the range of from about 0.015 g/cm³ to about 0.025 g/cm³ and sizes in the range of from about 20 µm to about 80 µm.

In certain embodiments, the unexpanded, expandable polymeric microspheres may have an average diameter of about 100 µm or less, in certain embodiments about 50 µm or less, in certain embodiments about 24 µm or less, in certain embodiments about 16 µm or less, in certain embodiments about 15 µm or less, in certain embodiments about 10 µm or less, and in other embodiments about 9 µm or less. In certain embodiments, the average diameter of the unexpanded polymeric microspheres may be from about 10 µm to about 16 µm, in certain embodiments from about 6 µm to about 9 µm, in certain embodiments from about 3 µm to about 6 µm, in certain embodiments from about 9 µm to about 15 µm, and in other embodiments from about 10 µm to about 24 µm. The polymeric microspheres may have a hollow core and compressible wall. The interior portion of the polymeric microspheres comprises a void cavity or cavities that may contain gas (gas filled) or liquid (liquid filled).

In certain embodiments, the expanded, expandable polymeric microspheres may have an average diameter of about 200 to about 900 µm, in certain embodiments, about 40 to about 216 µm, in certain embodiments about 36 to about 135 µm, in certain embodiments about 24 to about 81 µm, and in certain embodiments about 12 to about 54 µm.

The diameters expressed above are volume-average diameters. The diameter of the unexpanded and/or expanded, expandable polymeric microspheres may be determined by any method which is known in the art. For example, the volume-average diameter of the expandable polymeric microspheres may be determined by a light-scattering technique, such as by utilizing a light scattering device available from Malvern Instruments Ltd (Worcestershire, UK).

It has been found that the smaller the diameter of the expandable polymeric microspheres, the smaller the amount of the microspheres that is required to achieve the desired freeze-thaw damage resistance in cementitious compositions. This is beneficial from a performance perspective, in that a smaller decrease in compressive strength occurs by the addition of the microspheres, as well as an economic perspective, since a smaller amount of spheres is required. Similarly, the wall thickness of the polymeric microspheres may be optimized to minimize material cost, but to ensure that the wall thickness is adequate to resist damage and/or fracture during mixing, placing, consolidating and finishing processes of the cementitious composition.

A method of expanding expandable polymeric microspheres is provided, comprising contacting an aqueous slurry comprising unexpanded, expandable polymeric microspheres with heat proximate to and/or during manufacture of a construction material for use in cementitious compositions, wherein the heat is provided by microwave radiation or an electrical resistance heater.. In certain embodiments, the method may comprise contacting an aqueous slurry comprising unexpanded, expandable polymeric microspheres with heat in-situ during manufacture of a construction material. The construction material is not particularly limited, and may include aggregate material and/or other ingredients which may be found in cementitious compositions, such as fly ash, silica fume, slag, metakaolin, fibers, etc.

A method of manufacturing a construction material for use in cementitious compositions is also provided, comprising: (i) contacting an aqueous slurry of unexpanded, expandable polymeric microspheres with heat proximate to and/or during said manufacturing of the construction material to create expanded polymeric microspheres; wherein the heat is provided by microwave radiation or an electrical resistance heater, (ii) optionally pre-wetting the expanded polymeric microspheres; and (iii) mixing the expanded polymeric microspheres with the construction material.

The process of "contacting an aqueous slurry comprising unexpanded, expandable polymeric microspheres with heat proximate to and/or during manufacture of a construction material", may include at least one of: (i) contacting the aqueous slurry comprising the unexpanded, expandable polymeric microspheres with heat immediately prior to mixing the aqueous slurry with a construction material during manufacture of the construction material; or (ii) contacting the aqueous slurry comprising the unexpanded, expandable polymeric microspheres with heat to expand the expandable polymeric microspheres and quenching the expanded expandable polymeric microspheres into water at a construction material manufacturing facility, and reserving the quenched, expanded microsphere-containing aqueous slurry for mixing with a construction material manufactured at the facility.

In certain embodiments, the heat may be provided by directly contacting the aqueous slurry with a heated fluid, such as a gas or a liquid. In certain embodiments, the heated fluid may not comprise steam. In certain embodiments, the heated fluid may comprise a heated liquid, such as water. In certain embodiments, the heat may be provided by contacting the aqueous slurry with radiation, such as microwave radiation. In certain embodiments, the heat may be provided by an electrical resistance heater, for example embedded in the exterior walls of the treatment zone.

The amount of heat required will depend on the particular microsphere being used, considering the material out of which the microsphere is formed and the blowing agent encapsulated by the microsphere. While many types of microspheres commercially available today require significant amounts of heat to expand the microspheres, there is a current trend in the industry to create microspheres which require reduced amounts of heat to expand the microspheres, as reduced amounts of heat result in cost savings and safety enhancements during expansion of the microspheres.

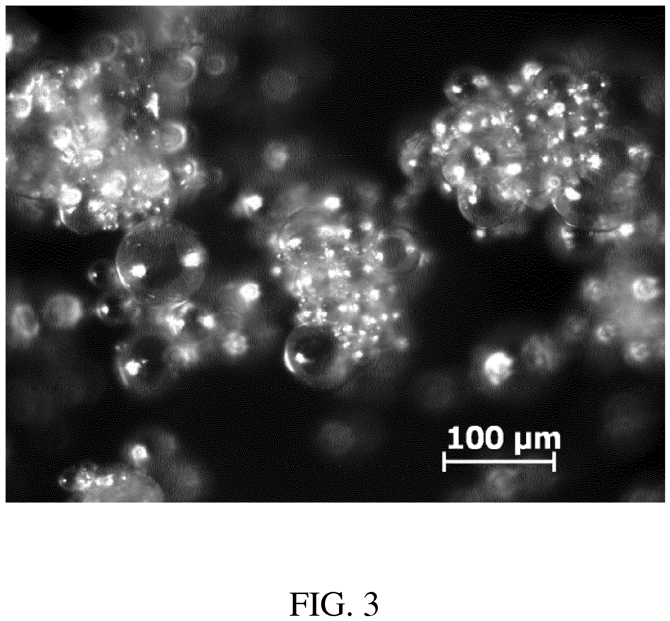

FIG. 3 is a photograph of expanded, expandable polymeric microspheres after being contacted with heat in order to expand the expandable polymeric microspheres.

As used herein, "at a construction material manufacturing facility" means that expansion of the unexpanded, expandable polymeric microspheres occurs at the same facility or at an adjacent or proximate facility where the construction material is manufactured.

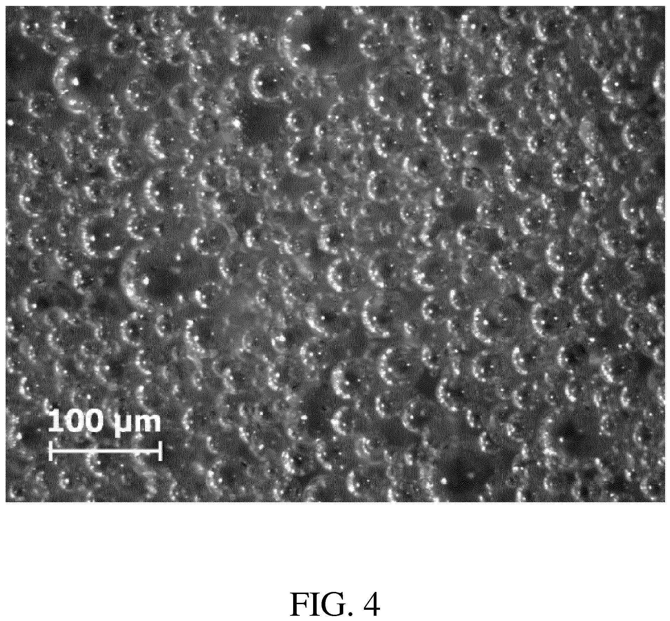

In certain embodiments, pre-wetting the expanded polymeric microspheres may comprise dispersing the expanded polymeric microspheres in liquid, optionally wherein the liquid comprises water. The pre-wetted expanded polymeric microspheres may be mixed with the construction material, which may be later used in a cementitious composition. FIG. 4 is a photograph of expanded polymeric microspheres dispersed in water.

In certain embodiments, pre-wetting the expanded polymeric microspheres may comprise adding the expanded polymeric microspheres and a liquid to a mixing tank, optionally wherein the liquid comprises water. In some embodiments, the expanded polymeric microspheres may comprise from about 1% to about 60% of the total volume of all material in the mixing tank.

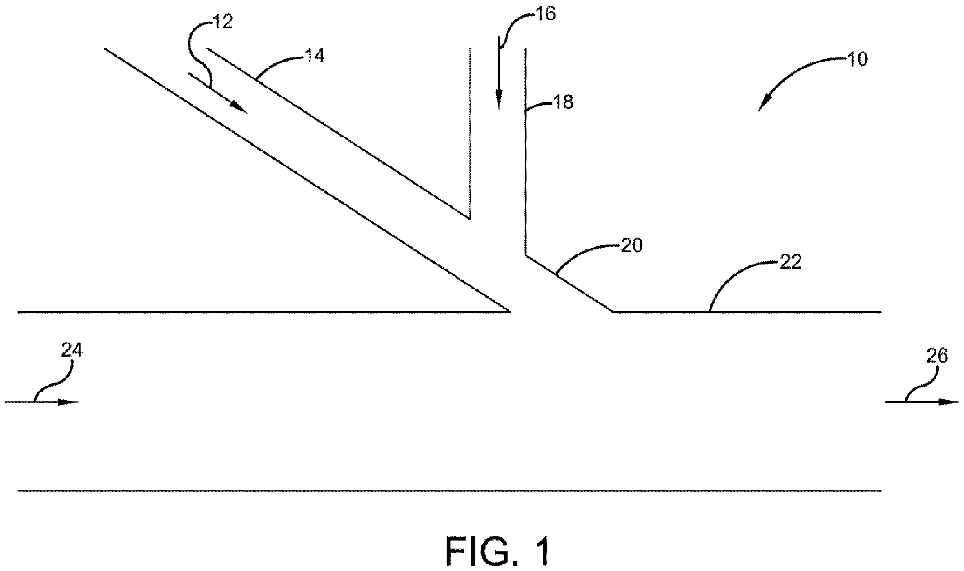

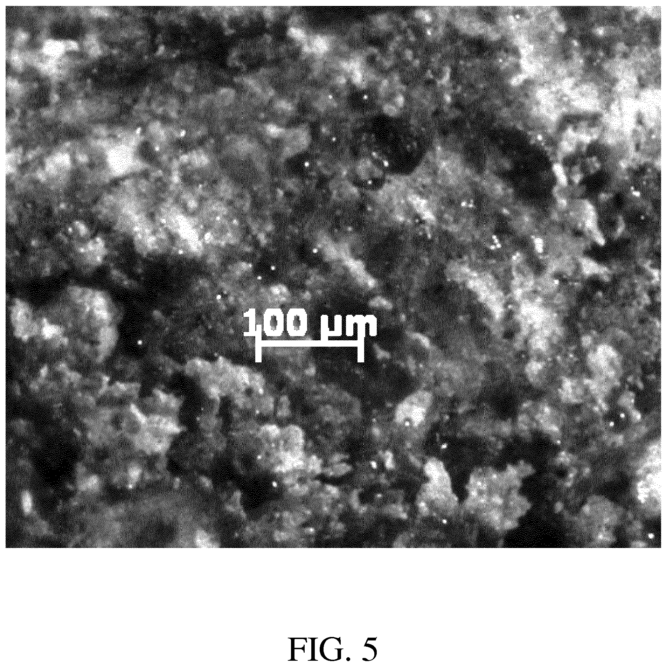

Referring to FIG. 1, in certain embodiments, the aqueous slurry 12 comprising unexpanded, expandable polymeric microspheres is fed through a first conduit 14, while at the same time heated fluid 16 is fed through a second conduit 18. The first 14 and second 18 conduits meet 20 immediately prior to feeding into a third conduit 22, which contains water 24 flowing 26 into a construction material manufacturing process (not shown) and/or into a reserve tank (not shown). The meeting of the first and second conduits results in rapid heating of the unexpanded, expandable polymeric microspheres, causing the microspheres to expand. The expanded microspheres are then quenched by the water flowing through the third conduit 22, which allows the expanded microspheres to retain their size. In an alternative embodiment, the third conduit 22 may be eliminated, and the expanded microspheres may be introduced directly into an on-site reservoir vessel (not shown) after being contacted by the heated fluid in the second conduit 18, and reserved for later mixing with a construction material. FIG. 5 is a photograph of expanded polymeric microspheres in an article of concrete. In certain embodiments, the expanded microspheres may have a volume which is up to about 75 times larger than their original, unexpanded volume.

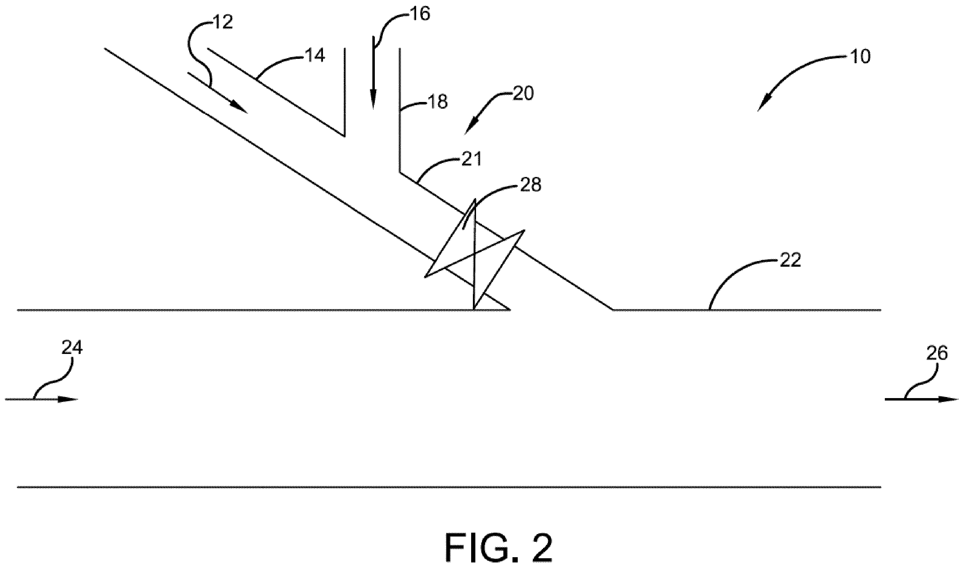

Referring to FIG. 2, in certain embodiments, the meeting 20 of the first 14 and second 18 conduits may comprise a fourth conduit 21. The fourth conduit 21 may include a back pressure generator 28, such as a flow control valve or a flow restriction device, such as an orifice nozzle. The back pressure generator 28 is capable of restricting and/or controlling the flow of the mixture of the aqueous slurry 12 and the heated fluid 16 in order to ensure that the mixture achieves the proper pressure and temperature required to adequately expand the expandable microspheres in the aqueous slurry 12. In certain embodiments, the back pressure generator 28 may also at least partially prevent backflow of the feed water 24 from the third conduit 22.

It is to be understood that the embodiments depicted in FIGS. 1 and 2 are merely exemplary, and that when other direct or indirect heat sources are used, a different arrangement of components may be desired or required, as would be apparent to a person of ordinary skill in the art depending on the particular source of heat chosen. Such arrangements are contemplated to be within the scope of some or all of the embodiments of the subject matter described and/or claimed herein.

In certain embodiments, the expanded polymeric microspheres may be prepared using an apparatus comprising: (a) a fluid material conduit in fluid communication with a source of a fluid material, wherein the fluid material comprises unexpanded, expandable polymeric microspheres; (b) a treatment zone in heat transfer communication with a source of heat and in fluid communication with the fluid material conduit, such that the fluid material is directly or indirectly contacted by heat within the treatment zone; and (c) a back pressure generator in fluid communication with the treatment zone, capable of increasing pressure in the treatment zone, which results in expansion of the expandable polymeric microspheres when the fluid material exits the treatment zone.

In one embodiment, a fluid material including water and the unexpanded, expandable polymeric microspheres is contacted with heat within the treatment zone, such that the unexpanded, expandable polymeric microspheres are subjected to increased temperature and pressure, which results in pre-expansion of the expandable polymeric microspheres. Upon exiting the treatment zone, optionally via the back pressure generator, the expandable polymeric microspheres experience a pressure drop equal to the difference between the pressure in the treatment zone and the pressure in the environment outside the treatment zone. This sudden decrease in pressure results in rapid expansion of the expandable polymeric microspheres.

The back pressure generator is capable of restricting and/or controlling the flow of the fluid material through the treatment zone, to ensure that the temperature and pressure within the treatment zone are sufficient to provide enough of a pressure drop to allow the expandable polymeric microspheres to expand to a desired degree upon exiting the back pressure generator. The back pressure generator may comprise, for example, a flow control valve or a flow restriction device, such as an orifice nozzle. Alternatively or additionally, the back pressure generator may comprise: (i) a length of conduit sufficient to impede flow through the treatment zone, such that the pressure inside the treatment zone is maintained or increased; and/or (ii) a conduit which has an interior size which is smaller than the interior size of the fluid material conduit, such that the pressure inside the treatment zone is maintained or increased; and/or (iii) a conduit which has an irregular interior wall pattern, such as a rifled conduit, such that the pressure inside the treatment zone is maintained or increased.

In certain embodiments, the temperature inside the treatment zone may be from about 60°C (140°F) to about 160°C (320°F), in certain embodiments from about 70°C (158°F) to about 160°C (320°F), in certain embodiments from about 80°C (176°F) to about 160°C (320°F), in certain embodiments from about 100°C (212°F) to about 160°C (320°F), in certain embodiments from about 105°C (221°F) to about 145°C (293°F), in certain embodiments from about 135°C (275°F) to about 145°C (293°F). In certain embodiments, the temperature inside the treatment zone may be from about 60°C (140°F) to about 145°C (293°F), in certain embodiments from about 60°C (140°F) to about 135°C (275°F), in certain embodiments from about 60°C (140°F) to about 105°C (221°F). In certain embodiments, the temperature inside the treatment zone may be from about 70°C (158°F) to about 145°C (293°F), in certain embodiments from about 70°C (158°F) to about 135°C (275°F), in certain embodiments from about 70°C (158°F) to about 105°C (221°F). In certain embodiments, the temperature inside the treatment zone may be from about 80°C (176°F) to about 145°C (293°F), in certain embodiments from about 80°C (176°F) to about 135°C (275°F), in certain embodiments from about 80°C (176°F) to about 105°C (221°F).

In certain embodiments, the pressure inside the treatment zone may be from about 46.1 kPa (6.69 psi) to about 618.1 kPa (89.65 psi), in certain embodiments from about 101.3 kPa (14.69 psi) to about 618.1 kPa (89.65 psi), in certain embodiments from about 120 kPa (17.4 psi) to about 420 kPa (60.9 psi), in certain embodiments from about 315 kPa (45.7 psi) to about 420 kPa (60.9 psi).

The fluid material comprising the expanded, expandable polymeric microspheres may be added to or mixed with the construction material.

The present methods may be performed on-site at construction material manufacturing facilities. The construction materials including expanded polymeric microspheres may then be transported to cementitious composition manufacturing facilities, such as ready mix or other concrete plants. Such cementitious composition manufacturing facilities may include storage areas for cement, water, and other components to be added to the cementitious compositions being produced, such as aggregate and/or cementitious composition admixtures. At the facilities, the various components of cementitious compositions, such as cement, water, aggregate, and/or admixtures are mixed together to form a cementitious composition. The mixing may be performed on a mixing truck, such as a concrete mixing truck. Once the components are mixed, the cementitious composition may be transported to a job site, where the composition is placed and allowed to harden. The cementitious composition may also be utilized to manufacture cementitious articles, such as concrete block or concrete pavers, on-site at the cementitious composition manufacturing facilities or at another facility.

In certain embodiments, the present methods allow for an aqueous slurry of expandable polymeric microspheres and/or an admixture comprising unexpanded, expandable polymeric microspheres to be shipped to construction material manufacturing facilities at minimal cost. Once the aqueous slurry containing the unexpanded, expandable polymeric microspheres arrives at such a facility, the expandable polymeric microspheres may be expanded on-site. The expanded polymeric microspheres may be mixed with the construction material in amounts which would provide an appropriate dosage (as described herein) of expanded microspheres in a cementitious composition made using the construction material. As compared with shipping slurries and/or admixtures which contain expanded expandable polymeric microspheres, which may have a volume of up to 75 times greater than unexpanded microspheres, shipping slurries and/or admixtures which contain unexpanded expandable microspheres drastically reduces shipping costs, which could equal or exceed the actual cost of the admixture. Further, because of the relatively low amount of expanded microspheres which would be needed to be mixed with the construction material, the costs of transporting the construction material including the expanded microspheres would not be significantly affected by including the expanded polymeric microspheres in the construction material. Furthermore, other logistical costs, such as storage, may also be reduced.

In certain embodiments, a cementitious composition comprising 1.5% by volume, based on the total volume of the cementitious composition, of expanded expandable polymeric microspheres may have a 30% higher 28-day compressive strength as compared to a cementitious composition comprising a conventional air-entraining agent, yet can also pass ASTM C 666, which is incorporated herein by reference. ASTM C-666 is used to test the freeze-thaw damage resistance of cementitious compositions.

The hydraulic cement may be a Portland cement, a calcium aluminate cement, a magnesium phosphate cement, a magnesium potassium phosphate cement, a calcium sulfoaluminate cement or any other suitable hydraulic binder. Aggregate may be included in the cementitious composition. The aggregate can be silica, quartz, sand, crushed marble, glass spheres, granite, limestone, calcite, feldspar, alluvial sands, any other durable aggregate (such as polymeric or other fibers), and mixtures thereof.

In certain embodiments, the amount of expanded, expandable polymeric microspheres to be included in the cementitious composition (which may comprise a cementitious article), delivered as described herein, may be from about 0.002 to about 0.06 percent by weight, based on the total weight of the cementitious composition. In other embodiments, the amount of expandable polymeric microspheres to be included in the cementitious composition may be from about 0.005 to about 0.04 percent by weight, based on the total weight of the cementitious composition. In further embodiments, the amount of expandable polymeric microspheres to be included in the cementitious composition may be from about 0.008 to about 0.03 percent by weight, based on the total weight of the cementitious composition.

In certain embodiments, the amount of expanded, expandable polymeric microspheres to be included in the cementitious composition, delivered as described herein, may be from about 0.2 to about 4 percent by volume, based on the total volume of the cementitious composition. In certain embodiments, the amount of expanded, expandable polymeric microspheres to be included in the cementitious composition may be from about 0.25 to about 4 percent by volume, based on the total volume of the cementitious composition. In certain embodiments, the amount of expanded, expandable polymeric microspheres to be included in the cementitious composition may be from about 0.4 to about 4 percent by volume, based on the total volume of the cementitious composition. In certain embodiments, the amount of expanded, expandable polymeric microspheres to be included in the cementitious composition may be from about 0.25 to about 3 percent by volume, based on the total volume of the cementitious composition. In certain embodiments, the amount of expanded, expandable polymeric microspheres to be included in the cementitious composition may be from about 0.5 to about 3 percent by volume, based on the total volume of the cementitious composition.

A cementitious composition made as described herein may contain other admixtures or ingredients and should not be necessarily limited to the stated formulations. These admixtures and/or ingredients that may be added include, but are not limited to: dispersants, set and strength accelerators/enhancers, set retarders, water reducers, corrosion inhibitors, wetting agents, water soluble polymers, rheology modifying agents, water repellents, non degrading fibers, dampproofing admixtures, permeability reducers, fungicidal admixtures, germicidal admixtures, insecticide admixtures, alkali-reactivity reducer, bonding admixtures, shrinkage reducing admixtures, and any other admixture or additive suitable for use in cementitious compositions. The admixtures and cementitious compositions described herein need not contain any of the foregoing components, but may contain any number of the foregoing components.

Aggregate can be included in the cementitious composition to provide mortars which include fine aggregate, and concretes which include fine and coarse aggregates. The fine aggregates are materials that almost entirely pass through a Number 4 sieve (ASTM C 125 and ASTM C 33), such as silica sand. The coarse aggregates are materials that are predominantly retained on a Number 4 sieve (ASTM C 125 and ASTM C 33), such as silica, quartz, crushed marble, glass spheres, granite, limestone, calcite, feldspar, alluvial sands, sands or any other durable aggregate, and mixtures thereof.

A pozzolan is a siliceous or aluminosiliceous material that possesses little or no cementitious value but will, in the presence of water and in finely divided form, chemically react with the calcium hydroxide produced during the hydration of Portland cement to form materials with cementitious properties. Diatomaceous earth, opaline cherts, clays, shales, fly ash, slag, silica fume, volcanic tuffs and pumicites are some of the known pozzolans. Certain ground granulated blast-furnace slags and high calcium fly ashes possess both pozzolanic and cementitious properties. Natural pozzolan is a term of art used to define the pozzolans that occur in nature, such as volcanic tuffs, pumices, trasses, diatomaceous earths, opaline, cherts, and some shales. Nominally inert materials can also include finely divided raw quartz, dolomites, limestones, marble, granite, and others. Fly ash is defined in ASTM C618.

If used, silica fume can be uncompacted or can be partially compacted or added as a slurry. Silica fume additionally reacts with the hydration byproducts of the cement binder, which provides for increased strength of the finished articles and decreases the permeability of the finished articles. The silica fume, or other pozzolans such as fly ash or calcined clay such as metakaolin, can be added to the cementitious wet cast mixture in an amount from about 5% to about 70% based on the weight of cementitious material.

A dispersant, if used can be any suitable dispersant such as lignosulfonates, beta naphthalene sulfonates, sulfonated melamine formaldehyde condensates, polyaspartates, polycarboxylates with and without polyether units, naphthalene sulfonate formaldehyde condensate resins, or oligomeric dispersants.

Polycarboxylate dispersants can be used, by which is meant a dispersant having a carbon backbone with pendant side chains, wherein at least a portion of the side chains are attached to the backbone through a carboxyl group, an ether group, or an amide or imide group. The term dispersant is also meant to include those chemicals that also function as a plasticizer, high range water reducer, fluidizer, antiflocculating agent, or superplasticizer for cementitious compositions.

The term oligomeric dispersant refers to oligomers that are a reaction product of: component A, optionally component B, and component C; wherein each component A is independently a nonpolymeric, functional moiety that adsorbs onto a cementitious particle; wherein component B is an optional moiety, where if present, each component B is independently a nonpolymeric moiety that is disposed between the component A moiety and the component C moiety; and wherein component C is at least one moiety that is a linear or branched water soluble, nonionic polymer substantially non-adsorbing to cement particles. Oligomeric dispersants are disclosed in U.S. Patent No. 6,133,347, U.S. Patent No. 6,492,461, and U.S. Patent No. 6,451,881.

Set and strength accelerators/enhancers that can be used include, but are not limited to: a nitrate salt of an alkali metal, alkaline earth metal, or aluminum; a nitrite salt of an alkali metal, alkaline earth metal, or aluminum; a thiocyanate of an alkali metal, alkaline earth metal or aluminum; an alkanolamine; a thiosulphate of an alkali metal, alkaline earth metal, or aluminum; a hydroxide of an alkali metal, alkaline earth metal, or aluminum; a carboxylic acid salt of an alkali metal, alkaline earth metal, or aluminum (preferably calcium formate); a polyhydroxylalkylamine; and/or a halide salt of an alkali metal or alkaline earth metal (preferably bromide).

The salts of nitric acid have the general formula M(NO₃)ₐ where M is an alkali metal, or an alkaline earth metal or aluminum, and where a is 1 for alkali metal salts, 2 for alkaline earth salts, and 3 for aluminum salts. Preferred are nitric acid salts of Na, K, Mg, Ca and Al.

Nitrite salts have the general formula M(NO₂)ₐ where M is an alkali metal, or an alkaline earth metal or aluminum, and where a is 1 for alkali metal salts, 2 for alkaline earth salts, and 3 for aluminum salts. Preferred are nitric acid salts ofNa, K, Mg, Ca and Al.

The salts of the thiocyanic acid have the general formula M(SCN)_{b}, where M is an alkali metal, or an alkaline earth metal or aluminum, and where b is 1 for alkali metal salts, 2 for alkaline earth salts and 3 for aluminum salts. These salts are variously known as sulfocyanates, sulfocyanides, rhodanates or rhodanide salts. Preferred are thiocyanic acid salts of Na, K, Mg, Ca and Al.

Alkanolamine is a generic term for a group of compounds in which trivalent nitrogen is attached directly to a carbon atom of an alkyl alcohol. A representative formula is N[H]_{c}[(CH₂)_{d}CHRCH₂R]ₑ, where R is independently H or OH, c is 3-e, d is 0 to about 4 and e is 1 to about 3. Examples include, but are not limited to, are monoethanoalamine, diethanolamine, triethanolamine and triisopropanolamine.

The thiosulfate salts have the general formula M_{f}(S₂O₃)_{g} where M is alkali metal or an alkaline earth metal or aluminum, and f is 1 or 2 and g is 1, 2 or 3, depending on the valencies of the M metal elements. Preferred are thiosulfate acid salts of Na, K, Mg, Ca and Al.

The carboxylic acid salts have the general formula RCOOM wherein R is H or C₁ to about C₁₀ alkyl, and M is alkali metal or an alkaline earth metal or aluminum. Preferred are carboxylic acid salts of Na, K, Mg, Ca and Al. An example of carboxylic acid salt is calcium formate.

A polyhydroxylalkylamine may have the general formula: 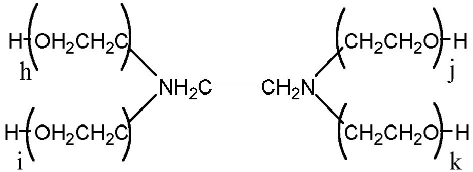 wherein h is 1 to 3, i is 1 to 3, j is 1 to 3, and k is 0 to 3. A preferred polyhydroxyalkylamine is tetrahydroxyethylethylenediamine.

Set retarding, or also known as delayed-setting or hydration control, admixtures are used to retard, delay, or slow the rate of setting of cementitious compositions. Set retarders are used to offset the accelerating effect of hot weather on the setting of cementitious compositions, or delay the initial set of cementitious compositions when difficult conditions of placement occur, or problems of delivery to the job site, or to allow time for special finishing processes. Most set retarders also act as low level water reducers and can also be used to entrain some air into cementitious compositions. Lignosulfonates, hydroxylated carboxylic acids, borax, gluconic, tartaric and other organic acids and their corresponding salts, phosphonates, certain carbohydrates such as sugars, polysaccharides and sugar-acids and mixtures thereof can be used as retarding admixtures.

Corrosion inhibitors serve to protect embedded reinforcing steel from corrosion. The high alkaline nature of cementitious compositions causes a passive and non-corroding protective oxide film to form on the steel. However, carbonation or the presence of chloride ions from deicers or seawater, together with oxygen can destroy or penetrate the film and result in corrosion. Corrosion-inhibiting admixtures chemically slow this corrosion reaction. The materials most commonly used to inhibit corrosion are calcium nitrite, sodium nitrite, sodium benzoate, certain phosphates or fluorosilicates, fluoroaluminates, amines, organic based water repelling agents, and related chemicals.

In the construction field, many methods of protecting cementitious compositions from tensile stresses and subsequent cracking have been developed through the years. One modern method involves distributing fibers throughout a fresh cementitious mixture. It is to be understood that fibers such as these may be included within the definition of the term "aggregate", as used herein. Upon hardening, this cementitious composition is referred to as fiber-reinforced cement. Fibers can be made of zirconium materials, carbon, steel, fiberglass, or synthetic materials, e.g., polypropylene, nylon, polyethylene, polyester, rayon, high-strength aramid, or mixtures thereof.

Dampproofing admixtures reduce the permeability of concrete that has low cement contents, high water-cement ratios, or a deficiency of fines in the aggregate portion. These admixtures retard moisture penetration into wet concrete and include certain soaps, stearates, and petroleum products.

Permeability reducers are used to reduce the rate at which water under pressure is transmitted through cementitious compositions. Silica fume, fly ash, ground slag, metakaolin, natural pozzolans, water reducers, and latex can be employed to decrease the permeability of the cementitious compositions.

Bacteria and fungal growth on or in hardened cementitious compositions may be partially controlled through the use of fungicidal, germicidal, and insecticidal admixtures. The most effective materials for these purposes are polyhalogenated phenols, dialdrin emulsions, and copper compounds.

Coloring admixtures are usually composed of pigments, either organic such as phthalocyanine or inorganic pigments such as metal-containing pigments that comprise, but are not limited to metal oxides and others, and can include, but are not limited to, iron oxide containing pigments, chromium oxide, aluminum oxide, lead chromate, titanium oxide, zinc white, zinc oxide, zinc sulfide, lead white, iron manganese black, cobalt green, manganese blue, manganese violet, cadmium sulfoselenide, chromium orange, nickel titanium yellow, chromium titanium yellow, cadmium sulfide, zinc yellow, ultramarine blue and cobalt blue.

Alkali-reactivity reducers can reduce the alkali-aggregate reaction and limit the disruptive expansion forces that this reaction can produce in hardened cementitious compositions. Pozzolans (fly ash, silica fume), blast-furnace slag, salts of lithium and barium are especially effective.

The shrinkage reducing agent which can be used comprises but is not limited to RO(AO)i-ioH, wherein R is a C₁₋₅ alkyl or C₅₋₆ cycloalkyl radical and A is a C₂₋₃ alkylene radical, alkali metal sulfate, alkaline earth metal sulfates, alkaline earth oxides, preferably sodium sulfate and calcium oxide.

The above listings of additional admixtures and additives are illustrative and not exhaustive or limiting.

In a first embodiment of the present subject matter, provided is a method of expanding expandable polymeric microspheres comprising contacting an aqueous slurry comprising unexpanded, expandable polymeric microspheres with heat proximate to and/or during manufacture of a construction material for use in a cementitious composition, wherein the heat is provided by microwave radiation or an electrical resistance heater.

The method of the first embodiment may further include that the method comprises contacting an aqueous slurry comprising unexpanded, expandable polymeric microspheres with heat in-situ during manufacture of a construction material.
The method of either or both of the first or subsequent embodiments may further include that said contacting the aqueous slurry comprising the unexpanded, expandable polymeric microspheres with heat in-situ during manufacture of an aggregate material comprises contacting the aqueous slurry comprising the unexpanded, expandable polymeric microspheres with heat prior to mixing the aqueous slurry with a construction material during manufacture of the construction material.

The method of any of the first or subsequent embodiments may further include that the flow of the aqueous slurry is restricted and/or controlled.

The method of any of the first or subsequent embodiments may further include that said contacting the aqueous slurry comprising the unexpanded, expandable polymeric microspheres with heat in-situ during manufacture of a construction material comprises contacting the aqueous slurry comprising the unexpanded, expandable polymeric microspheres with heat to expand the expandable polymeric microspheres and quenching the expanded expandable polymeric microspheres into water at a construction material manufacturing facility, and reserving the quenched, expanded microsphere-containing aqueous slurry for introduction into a construction material manufactured at the facility.

The method of any of the first or subsequent embodiments may further include that the quenched, expanded microsphere-containing aqueous slurry is reserved in a reserve tank.

The method of any of the first or subsequent embodiments may further include that, prior to said quenching the expanded expandable polymeric microspheres into water, the flow of the aqueous slurry is restricted and/or controlled.

In a second embodiment of the present subject matter, provided is a method of manufacturing a construction material, the method comprising: (i) performing the method of any of the first or subsequent embodiments; (ii) optionally pre-wetting the expanded polymeric microspheres; and (iii) mixing the expanded polymeric microspheres with the construction material.

The method of the second embodiment may further include that said pre-wetting the expanded polymeric microspheres comprises dispersing the expanded polymeric microspheres in liquid, optionally wherein the liquid comprises water.

The method of either or both of the second or subsequent embodiments may further include that said pre-wetting the expanded polymeric microspheres comprises adding the expanded polymeric microspheres and a liquid to a mixing tank, optionally wherein the liquid comprises water.

The method of any of the second or subsequent embodiments may further include that the expanded polymeric microspheres comprise from about 1% to about 60% of the total volume of all material in the mixing tank.

The method of any of the second or subsequent embodiments may further include retaining a dispersion of pre-wetted, expanded polymeric microspheres in at least one of a plurality of reservoirs prior to mixing with the construction material.

In a third embodiment of the present subject matter, provided is a method of manufacturing a construction material, the method comprising: (i) contacting an aqueous slurry of unexpanded, expandable polymeric microspheres with heat proximate to and/or during said manufacturing of the construction material to create expanded polymeric microspheres, wherein the heat is provided by microwave radiation or an electrical resistance heater.; (ii) optionally pre-wetting the expanded polymeric microspheres; and (iii) mixing the expanded polymeric microspheres with the construction material.

The method of the third embodiment may further include contacting an aqueous slurry comprising unexpanded, expandable polymeric microspheres with heat in-situ during manufacture of a construction material.

The method of either or both of the third or subsequent embodiments may further include that said pre-wetting the expanded polymeric microspheres comprises dispersing the expanded polymeric microspheres in liquid, optionally wherein the liquid comprises water.

The method of any of the third or subsequent embodiments may further include that said pre-wetting the expanded polymeric microspheres comprises adding the expanded polymeric microspheres and a liquid to a mixing tank, optionally wherein the liquid comprises water.

The method of any of the third or subsequent embodiments may further include that the expanded polymeric microspheres comprise from about 1% to about 60% of the total volume of all material in the mixing tank.

The method of any of the third or subsequent embodiments may further include that, after said contacting the aqueous slurry of unexpanded, expandable polymeric microspheres with heat, the flow of the aqueous slurry is restricted and/or controlled.

The method of any of the third or subsequent embodiments may further include that the flow of the aqueous slurry is restricted and/or controlled by a device which generates back pressure.

The method of any of the third or subsequent embodiments may further include that the device which generates back pressure is a valve or an orifice nozzle.

The method of any of the third or subsequent embodiments may further include retaining a dispersion of pre-wetted, expanded polymeric microspheres in at least one of a plurality of reservoirs prior to mixing with the construction material.

In a fourth embodiment of the present subject matter, provided is a method of manufacturing a cementitious composition comprising: (i) performing the method of any of the first, second, third or subsequent embodiments to form a construction material including expanded polymeric microspheres; and (ii) mixing the construction material including expanded polymeric microspheres with water, cement and optionally additional ingredients to form a cementitious composition.

It will be understood that the embodiments described herein are merely exemplary, and that one skilled in the art may make variations and modifications without departing from the scope of the invention. All such variations and modifications are intended to be included within the scope of the invention as defined in the claims. Further, all embodiments disclosed are not necessarily in the alternative, as various embodiments of the invention may be combined to provide the desired result.

## Claims

1. A method of expanding expandable polymeric microspheres comprising contacting an aqueous slurry comprising unexpanded, expandable polymeric microspheres with heat proximate to and/or during manufacture of a construction material for use in a cementitious composition, wherein the heat is provided by microwave radiation or an electrical resistance heater.

2. The method of claim 1, wherein the method comprises contacting an aqueous slurry comprising unexpanded, expandable polymeric microspheres with heat in-situ during manufacture of a construction material.

3. The method of either claim 1 or claim 2, wherein said contacting the aqueous slurry comprising the unexpanded, expandable polymeric microspheres with heat in-situ during manufacture of a construction material comprises contacting the aqueous slurry comprising the unexpanded, expandable polymeric microspheres with heat prior to mixing the aqueous slurry with an aggregate material during manufacture of the construction material.

4. The method of claim 3, wherein the flow of the aqueous slurry is restricted and/or controlled.

5. The method of either claim 1 or claim 2, wherein said contacting the aqueous slurry comprising the unexpanded, expandable polymeric microspheres with heat in-situ during manufacture of a construction material comprises contacting the aqueous slurry comprising the unexpanded, expandable polymeric microspheres with heat to expand the expandable polymeric microspheres and quenching the expanded expandable polymeric microspheres into water at a construction material manufacturing facility, and reserving the quenched, expanded microsphere-containing aqueous slurry for introduction into a construction material manufactured at the facility.

6. The method of claim 5, wherein the quenched, expanded microsphere-containing aqueous slurry is reserved in a reserve tank.

7. The method of either claim 5 or claim 6, wherein prior to said quenching the expanded expandable polymeric microspheres into water, the flow of the aqueous slurry is restricted and/or controlled.

8. A method of manufacturing a construction material, the method comprising: (i) performing the method of any one of claims 1 to 7; (ii) optionally pre-wetting the expanded polymeric microspheres; and (iii) mixing the expanded polymeric microspheres with the construction material.

9. The method of claim 8, wherein said pre-wetting the expanded polymeric microspheres comprises dispersing the expanded polymeric microspheres in liquid, optionally wherein the liquid comprises water.

10. The method of either claim 8 or claim 9, wherein said pre-wetting the expanded polymeric microspheres comprises adding the expanded polymeric microspheres and a liquid to a mixing tank, optionally wherein the liquid comprises water.

11. The method of claim 10, wherein the expanded polymeric microspheres comprise from about 1% to about 60% of the total volume of all material in the mixing tank.

12. The method of any one of claims 8 to 11, further comprising retaining a dispersion of pre-wetted, expanded polymeric microspheres in at least one of a plurality of reservoirs prior to mixing with the construction material.

13. A method of manufacturing a cementitious composition comprising: (i) performing the method of any one of claims 1 to 12 to form a construction material including expanded polymeric microspheres; and (ii) mixing the construction material including expanded polymeric microspheres with water, cement and optionally additional ingredients to form a cementitious composition.

## Patentansprüche

1. Verfahren zum Expandieren von blähfähigen polymeren Mikrohohlkugeln, das ein Inkontaktbringen einer wässrigen Aufschlämmung, die nicht expandierte, blähfähige polymere Mikroholkugeln umfasst, mit Wärme in der Nähe und/oder während der Herstellung eines Baustoffs zur Verwendung in einer zementären Zusammensetzung umfasst, wobei die Wärme über Mikrowellenstrahlung oder eine elektrische Widerstandsheizung abgegeben wird.

2. Verfahren nach Anspruch 1, wobei das Verfahren ein Inkontaktbringen einer wässrigen Aufschlämmung, die nicht expandierte, blähfähige polymere Mikrohohlkugeln umfasst, mit Wärme vor Ort während der Herstellung eines Baustoffs umfasst.

3. Verfahren nach entweder Anspruch 1 oder Anspruch 2, wobei das Inkontaktbringen der wässrigen Aufschlämmung, die die nicht expandierten, blähfähigen polymeren Mikrohohlkugeln umfasst, mit Wärme vor Ort während der Herstellung eines Baustoffs ein Inkontaktbringen der wässrigen Aufschlämmung, die die nicht expandierten, blähfähigen polymeren Mikrohohlkugeln umfasst, mit Wärme vor einem Mischen der wässrigen Aufschlämmung mit einer Gesteinskörnung während der Herstellung des Baustoffs umfasst.

4. Verfahren nach Anspruch 3, wobei der Durchfluss der wässrigen Aufschlämmung begrenzt und/oder geregelt wird.

5. Verfahren nach entweder Anspruch 1 oder Anspruch 2, wobei das Inkontaktbringen der wässrigen Aufschlämmung, die die nicht expandierten, blähfähigen polymeren Mikrohohlkugeln umfasst, mit Wärme vor Ort während der Herstellung eines Baustoffs ein Inkontaktbringen der wässrigen Aufschlämmung, die die nicht expandierten, blähfähigen polymeren Mikrohohlkugeln umfasst, mit Wärme, damit die blähfähigen polymeren Mikrohohlkugeln expandiert werden, und ein schlagartiges Abkühlen der expandierten, blähfähigen polymeren Mikrohohlkugeln in Wasser in einer Einrichtung zur Herstellung von Baustoffen und ein Aufbewahren der schlagartig abgekühlten wässrigen Aufschlämmung, die expandierte Mikrohohlkugeln enthält, zum Einbringen in einen in der Einrichtung hergestellten Baustoff umfasst.

6. Verfahren nach Anspruch 5, wobei die schlagartig abgekühlte wässrige Aufschlämmung, die expandierte Mikrohohlkugeln enthält, in einem Reservebehälter aufbewahrt wird.

7. Verfahren nach entweder Anspruch 5 oder Anspruch 6, wobei vor dem schlagartigen Abkühlen der expandierten, blähfähigen polymeren Mikrohohlkugeln in Wasser der Durchfluss der wässrigen Aufschlämmung begrenzt und/oder geregelt wird.

8. Verfahren zum Herstellen eines Baustoffs, wobei das Verfahren umfasst: (i) Durchführen des Verfahrens nach einem der Ansprüche 1 bis 7; (ii) gegebenenfalls Vorbefeuchten der expandierten polymeren Mikrohohlkugeln; und (iii) Mischen der expandierten polymeren Mikrohohlkugeln mit dem Baustoff.

9. Verfahren nach Anspruch 8, wobei das Vorbefeuchten der expandierten polymeren Mikrohohlkugeln ein Verteilen der expandierten polymeren Mikrohohlkugeln in Flüssigkeit umfasst, wobei die Flüssigkeit gegebenenfalls Wasser umfasst.

10. Verfahren nach Anspruch 8 oder Anspruch 9, wobei das Vorbefeuchten der expandierten polymeren Mikrohohlkugeln ein Einfüllen der expandierten polymeren Mikrohohlkugeln und einer Flüssigkeit in einen Mischbehälter umfasst, wobei die Flüssigkeit gegebenenfalls Wasser umfasst.

11. Verfahren nach Anspruch 10, wobei die expandierten polymeren Mikrohohlkugeln zwischen ungefähr 1% und ungefähr 60% des Gesamtvolumens des gesamten Materials im Mischbehälter darstellen.

12. Verfahren nach einem der Ansprüche 8 bis 11, ferner umfassend ein Zurückhalten einer Dispersion aus vorbefeuchteten, expandierten polymeren Mikrohohlkugeln in mindestens einem von einer Vielzahl von Vorratsbehältern vor dem Mischen mit dem Baustoff.

13. Verfahren zum Herstellen einer zementären Zusammensetzung, umfassend: (i) Durchführen des Verfahrens nach einem der Ansprüche 1 bis 12 zum Bilden eines Baustoffs, der expandierte polymere Mikrohohlkugeln aufweist, und (ii) Mischen des Baustoffs, der expandierte polymere Mikrohohlkugeln aufweist, mit Wasser, Zement und gegebenenfalls zusätzlichen Inhaltsstoffen zum Bilden einer zementären Zusammensetzung.

## Revendications

1. Procédé d'expansion de microsphères polymères expansibles, comprenant la mise en contact d'une suspension aqueuse comprenant des microsphères polymères expansibles, non expansées, avec de la chaleur peu avant et/ou durant la fabrication d'un matériau de construction destiné à une utilisation dans une composition à base de ciment, dans lequel la chaleur est apportée par un rayonnement de type micro-ondes ou un appareil de chauffage à résistance électrique.

2. Procédé selon la revendication 1, le procédé comprenant la mise en contact d'une suspension aqueuse comprenant des microsphères polymères expansibles, non expansées, avec de la chaleur in situ durant la fabrication d'un matériau de construction.

3. Procédé selon la revendication 1 ou la revendication 2, dans lequel ladite mise en contact de la suspension aqueuse comprenant les microsphères polymères expansibles, non expansées, avec de la chaleur in situ durant la fabrication d'un matériau de construction comprend une mise en contact de la suspension aqueuse comprenant les microsphères polymères expansibles, non expansées, avec de la chaleur avant le mélange de la suspension aqueuse avec un matériau de type agrégat durant la fabrication du matériau de construction.

4. Procédé selon la revendication 3, dans lequel le débit de la suspension aqueuse est limité et/ou contrôlé.

5. Procédé selon la revendication 1 ou la revendication 2, dans lequel ladite mise en contact de la suspension aqueuse comprenant les microsphères polymères expansibles, non expansées, avec de la chaleur in situ durant la fabrication d'un matériau de construction comprend une mise en contact de la suspension aqueuse comprenant les microsphères polymères expansibles, non expansées, avec de la chaleur pour expanser les microsphères polymères expansibles et un refroidissement rapide des microsphères polymères expansibles, expansées, dans de l'eau dans une installation de fabrication de matériaux de construction, et la réservation de la suspension aqueuse contenant les microsphères expansées et soumises à un refroidissement rapide en vue de son introduction dans un matériau de construction fabriqué dans l'installation.

6. Procédé selon la revendication 5, dans lequel la suspension aqueuse contenant les microsphères expansées et soumises à un refroidissement rapide est mise en réserve dans une cuve de réserve.

7. Procédé selon la revendication 5 ou la revendication 6, dans lequel, avant ledit refroidissement rapide des microsphères polymères expansibles, expansées, dans de l'eau, le débit de la suspension aqueuse est limité et/ou contrôlé.

8. Procédé de fabrication d'un matériau de construction, le procédé comprenant : (i) l'exécution du procédé selon l'une quelconque des revendications 1 à 7 ; (ii) optionnellement, un mouillage préalable des microsphères polymères expansées ; et (iii) un mélange des microsphères polymères expansées avec le matériau de construction.

9. Procédé selon la revendication 8, dans lequel ledit mouillage préalable des microsphères polymères expansées comprend une dispersion des microsphères polymères expansées dans un liquide, optionnellement dans lequel le liquide comprend de l'eau.

10. Procédé selon la revendication 8 ou la revendication 9, dans lequel ledit mouillage préalable des microsphères polymères expansées comprend l'addition des microsphères polymères expansées et d'un liquide à une cuve de mélange, optionnellement dans lequel le liquide comprend de l'eau.

11. Procédé selon la revendication 10, dans lequel les microsphères polymères expansées représentent d'environ 1 % à environ 60 % du volume total de tout le matériau présent dans la cuve de mélange.

12. Procédé selon l'une quelconque des revendications 8 à 11, comprenant en outre la conservation d'une dispersion de microsphères polymères expansées et soumises à un mouillage préalable dans au moins l'une d'une pluralité de cuves avant le mélange avec le matériau de construction.

13. Procédé de fabrication d'une composition à base de ciment, comprenant : i) l'exécution du procédé selon l'une quelconque des revendications 1 à 12 pour former un matériau de construction contenant des microsphères polymères expansées ; et (ii) un mélange du matériau de construction contenant des microsphères polymères expansées avec de l'eau, du ciment et optionnellement des ingrédients additionnels pour former une composition à base de ciment.
